# FASCICULE DE BREVET EUROPEEN

(11) **EP 3 645 471 B1**
(45) Date de publication et mention de la délivrance du brevet: **12.03.2025**
(21) Numéro de dépôt: 18752545.6
(22) Date de dépôt: 29.06.2018
(51) Int. Cl.: C03B 1/00, C03C 1/02, C03B 3/00, C03B 5/235

(54) **FABRICATION DE VERRE À PARTIR D'UN MÉLANGE COMPRENANT DE L'OXYDE DE CALCIUM**
HERSTELLUNG VON GLAS AUS EINER KALZIUMOXID ENTHALTENDEN MISCHUNG
PRODUCTION OF GLASS FROM A MIXTURE COMPRISING CALCIUM OXIDE

(30) Priorité: 30.06.2017 FR 1756138
(43) Date de publication de la demande: 06.05.2020
(73) Titulaire: Arc France, 62510 Arques (FR)
(72) Inventeur: CHARLES, Hervé, 62510 Arques (FR); BONNINGUES, Jean-Marie, 62510 Arques (FR); DONZE, Sébastien, 62510 Arques (FR); FAMCHON, François, 62510 Arques (FR); IBLED, Xavier, 62510 Arques (FR)
(74) Mandataire: Cabinet Netter
(86) Numéro de dépôt international: PCT/FR2018/051626
(87) Numéro de publication internationale: WO 2019/002802

(56) Documents cités:
- EP-A2- 0 355 618
- EP-A2- 1 236 691
- WO-A1-90/12760
- US-A- 4 028 131
- US-A- 4 539 030
- US-A1- 2007 098 610
- US-A1- 2010 242 545
- RICHARD L LEHMAN ET AL: "Glass Batch Wetting With Water", GLASS INDUSTRY,, vol. 58, no. 12, 1 December 1977 (1977-12-01), pages 16 - 24, XP001253940

## Description

L'invention concerne le domaine de l'industrie verrière. La fusion des matériaux constitutifs du verre nécessite l'apport d'une grande quantité d'énergie. La température du bain de verre est de l'ordre de 1300 à 1500°C. Selon sa composition, le verre est destiné à un usage ménager direct, par exemple les verres à boire, le vitrage, ou indirect, par exemple les plaques vitrocéramiques, ou industriel.

Le four est soumis à des contraintes thermiques et mécaniques très élevées. Le four est construit avec des revêtements réfractaires de haute qualité. Ces revêtements réfractaires sont onéreux et sensibles à certains constituants du verre susceptibles de réaction chimique. Les revêtements réfractaires étant de mauvais conducteurs de chaleur, le chauffage du bain de verre est effectué par le dessus.

On dispose un brûleur à flamme à combustible liquide ou gazeux entre le bain de verre et le sommet du four appelé voûte. Le bain de verre est chauffé par radiation pour l'essentiel. La température de sortie des gaz est de 1300 à 1600 °C selon la famille de verre.

Par ailleurs, la fabrication de verre dégage de grandes quantités de gaz. Le bain de verre est dégazé pendant plusieurs heures pour éviter la formation de bulles dans le verre. Pour faciliter le dégazage, des additifs d'affinage tels que des sulfates peuvent être utilisés. Le four fonctionne par lots de verre de composition choisie.

Les gaz de sortie, issus du dégazage et issus de la combustion, sont évacués par une cheminée.

La Demanderesse a poursuivi l'objectif d'une réduction majeure de la consommation d'énergie rapportée à la masse de verre produite.

Dans un verre sodo-calcique, les matériaux initiaux principaux sont du calcaire, de la soude par exemple sous forme de carbonate de sodium Na₂CO₃ et de la silice sous forme de sable de quartz. Le calcaire et le carbonate de sodium libèrent du CO₂ lors de l'affinage du verre.

Le document JPS55100236 décrit l'utilisation de scories en vue de fabriquer du verre. Toutefois de nombreux obstacles techniques ne sont pas abordés. La Demanderesse n'a pas connaissance d'une réalisation industrielle d'une telle technologie.

US 2 084 328 décrit une charge de four de verrerie élaborée à partir de dolomie et de kaolin mélangés en voie humide. La bouillie de dolomie et de kaolin est calcinée, puis mélangée avec de la cendre de soude, du sable et de la chaux vive.

US 4 028 131 décrit la préparation d'une charge vitrifiable pour un verre sodo-calcique comprenant le mélange de sable, chaux et dolomie calcinée, l'incorporation d'un hydroxyde de métal alcalin et une quantité d'eau suffisante pour une granulation.

L'article « Glass batch wetting with water » de Lehman & Manring, dans Glass Industry vol. 58 n°12 traite de matières premières comprenant sable, calcaire, feldspath et cendre de soude avec ajout d'eau pour obtenir des hydrates de cendre de soude.

Le document US2005/0022557 décrit un pré-mélange Na₂CO₃ et SiO₂ et parallèlement à un pré-mélange CaCO₃ et SiO₂ avec pré-réaction, suivi d'un mélange des deux pré-mélanges et d'un complément de SiO₂ puis de l'introduction dans un four de verrerie.

Le document US2012/0216574 concerne un procédé de fabrication de verre comprenant la calcination du CaCO₃ pour former du CaO, la formation d'un verre Na₂SiO₃ en phase liquide, et le mélange en phase liquide du CaO et du Na₂SiO₃ pour former un verre sodo-calcique.

Par ailleurs, la Demanderesse a eu connaissance d'un séminaire « Glass Trend Seminar » des 18 & 19 octobre 2012 à Eindhoven a vu MM. Hande Sesigür, Melek Orhon, Banu Arslan de la société SISECAM présenter un document « Alternative Raw Materials for Improving the Melting Properties in Glass Production » qui rapporte un essai d'introduction dans un four de verrerie de calcaire calciné aboutissant à une réduction légère de consommation d'énergie, à une fusion plus facile, à une augmentation de la tirée spécifique du four mais à un prix de revient plus élevé de la tonne de verre produite, à la présence forte de volages au-dessus du bain de verre, à une corrosion accrue des parois du four et à des problèmes d'adhésion entre particules.

La Demanderesse a procédé à des essais. Le remplacement du calcaire par de la chaux vive dans les matériaux de fabrication du verre pose des difficultés, notamment liées à la réactivité de la chaux avec l'humidité de l'air. Le bilan économique de la chaux est moins favorable que celui du calcaire malgré un tonnage transporté et manipulé réduit. Par ailleurs, une chaux de forte granulométrie est lente à fondre dans le bain verrier et peut laisser des infondus. Une chaux de faible granulométrie génère des volages entraînés par les gaz de combustion. Une partie de la chaux est perdue et vient encrasser les conduits de fumée en aval du four.

Malgré ces obstacles, la Demanderesse a poursuivi et mis au point un mélange précurseur de verre. Une difficulté est apparue lors de la préparation du mélange. En l'absence d'eau, le mélange pulvérulent n'a pas de tenue et génère des volages en grande quantité. Mais l'eau et la chaux réagissent ensemble de manière exothermique. La température atteinte rend le mélange difficile à manipuler.

La Demanderesse a mis au point un procédé de préparation d'un mélange précurseur fournissant un mélange à faible échauffement et à faible génération de volage. La granulométrie des constituants apportés au mélange est sensiblement conservée à ceci près que les manipulations mécaniques de transfert peuvent générer un effet de broyage réduisant légèrement la granulométrie. Ledit mélange introduit dans un four verrier permet une réduction de l'énergie nécessaire à la production de verre et de la quantité de CO₂ dégagée de l'ordre de 3 à 6%. Par ailleurs, la durée de la fonte du mélange est inférieure à la durée constatée lors de l'utilisation de carbonate de calcium. Il en découle une augmentation de la productivité du four, se traduisant aussi par une baisse supplémentaire de la consommation d'énergie de l'ordre de 4 à 6%.

L'invention propose un procédé de préparation d'un mélange précurseur pour la fabrication de verre comprenant la préparation d'un mélange précurseur de verre pour four verrier, dans lequel on mélange de l'eau, du sable et du carbonate de sodium dans des proportions massiques comprises entre plus de 0 et 5 %, 40 et 65 %, et plus de 0 et au plus 25 % respectivement, et, après un délai d'au moins 10 minutes et de moins d'une heure, on ajoute de l'oxyde de calcium dans une proportion massique comprise entre 1 et 20 % du total.

L'invention propose un procédé de préparation d'un mélange précurseur pour la fabrication de verre comprenant la préparation d'un mélange précurseur de verre pour four verrier, dans lequel on mélange de l'eau, du sable et du carbonate de sodium dans des proportions massiques comprises entre plus de 0 et 5 %, 40 et 65 %, et plus de 0 et au plus 25 % respectivement, et, après un délai d'au moins une heure, on ajoute de l'oxyde de calcium dans une proportion massique comprise entre 1 et 20 % du total. La préparation du mélange précurseur ne voit pas d'échauffement spontané significatif ou à tout le moins susceptible de présenter un inconvénient. Le retard à l'apport d'oxyde de calcium laisse le temps au carbonate de sodium de capturer l'eau disponible, notamment dans le sable. La Demanderesse s'est rendu compte de l'intérêt qu'il y a à se passer de réaction chimique faisant intervenir la chaux avant l'enfournement.

Dans un mode de réalisation, la proportion massique d'eau est comprise entre 1,5 et 3 %. Le risque de génération de volages, même avec des fractions de mélange de faible granulométrie, est réduit.

Dans un mode de réalisation, ledit délai est d'au moins une heure.

Dans un mode de réalisation, ledit délai est compris entre au moins 10 minutes et moins de une heure pour un mélange eau, sable et carbonate de sodium à au plus 4,1% d'humidité.

Dans un mode de réalisation, le carbonate de sodium présente une granulométrie avec moins de 5% passant au tamis de 0,075 mm, moins de 15 % passant au tamis de 0,150 mm et moins de 5% ne passant pas au tamis de 0,600 mm.

Dans un mode de réalisation, ledit mélange eau, sable et carbonate de sodium présente au plus 3% d'humidité avec du carbonate de sodium de granulométrie majoritairement supérieure à 0,500 mm et inférieure à 1,000 mm.

Dans un mode de réalisation, ledit mélange eau, sable et carbonate de sodium présente au plus 2% d'humidité avec du carbonate de sodium de granulométrie majoritairement inférieure à 0,250 mm.

Dans un mode de réalisation, ledit délai est de moins de 72 heures.

Dans un mode de réalisation, la température initiale des matières premières est d'au moins 30°C. La vitesse d'hydratation du carbonate de sodium est augmentée.

Dans un mode de réalisation, l'oxyde de calcium présente une granulométrie telle que 70 à 90% en masse ne passe pas au tamis de 0,1 mm, préférablement 30 à 80% en masse ne passe pas au tamis de0,5 mm, plus préférablement 30 à 70% en masse ne passe pas au tamis de2 mm. La génération de volages est faible.

Dans un mode de réalisation, l'oxyde de calcium présente une granulométrie telle que plus 90 % en masse ne passe pas au tamis de 0,1 mm et moins de 5 % en masse ne passe pas au tamis de 4 mm, préférablement plus de 95 % en masse ne passe pas au tamis de 0,1 mm et moins de 1 % en masse ne passe pas au tamis de 4 mm. La quantité d'air introduit dans le four avec le mélange est faible et les infondus sont rares.

Dans un mode de réalisation, l'oxyde de calcium présente une granulométrie moyenne comprise entre 1 et 1,5 mm.

Dans un mode de réalisation, le mélange précurseur est mis en œuvre dans un four verrier moins de 1 heure après sa préparation pour une granulométrie de 90% ou plus en masse passant au tamis de 0,1 mm, préférablement moins de 2 heures après sa préparation pour une granulométrie de 70 à 90% en masse passant au tamis de 0,1 mm. Une granulométrie fine est associée à une réactivité élevée et à une mise en œuvre rapide. La fusion est alors rapide.

Dans un mode de réalisation, le mélange précurseur est mis en œuvre dans un four verrier moins de 8 heures après sa préparation pour une granulométrie de 70% ou plus en masse passant au tamis de 2 mm. Une granulométrie moyenne permet une mise en œuvre souple avec des durées de stockage intéressantes industriellement.

Dans un mode de réalisation, ledit sable est sec. La quantité d'eau apportée est bien maîtrisée. Dans la variante sans apport d'eau, de préférence associée à une granulométrie moyenne ou forte, l'énergie consommée est réduite. Le sable est considéré comme sec à une humidité inférieure à 0,1%. Le sable peut être séché par chauffage à une température de 15 à 20°C au-dessus de la température ambiante.

Dans un mode de réalisation, l'eau est présente dans ledit sable, préférablement 3 à 4% en masse. Le coût d'un apport d'eau volontaire est évité.

Dans ce mode de réalisation, l'oxyde de calcium est dépourvu d'addition volontaire d'oxyde d'aluminium. De l'oxyde d'aluminium peut être apporté lors du mélange de l'eau, du sable et du carbonate de sodium.

Dans ce mode de réalisation, on ajoute du calcin au mélange précurseur de verre, avant ou après l'ajout d'oxyde de calcium, dans une proportion massique comprise entre 5 et 40 % du total. Le calcin peut provenir de lots de verre déclassés. Les lots sont de composition connue de sorte que les quantités des autres matières premières est ajustée à la qualité de verre souhaitée.

Dans ce mode de réalisation, le mélange précurseur de verre est préparé à l'état solide. On évite l'évaporation de l'eau dans le cas d'une bouillie. On évite la consommation d'énergie d'une fusion préalable des matières premières.

Dans ce mode de réalisation, le mélange précurseur de verre est préparé à une température comprise entre la température ambiante et la température ambiante augmentée de 20°C.

Dans un mode de réalisation, le mélange précurseur de verre est préparé à une température comprise entre +0 et +20°C de la température préalable de l'eau, du sable, du carbonate de soude et de l'oxyde de calcium. Une moyenne pondérée peut être prise comme température préalable.

Dans un mode de réalisation, le mélange précurseur de verre est préparé sans apport d'énergie thermique. On évite une dessiccation du mélange, génératrice de fines et donc de volages.

Dans un mode de réalisation, ledit mélange est enfourné dans un four électrique.

Dans un mode de réalisation, on fournit dans un four de verrerie un mélange d'eau, de sable, de soude et d'oxyde de calcium, l'oxyde de calcium étant dans une proportion massique comprise entre 1 et 20 % du total du mélange, et on met le mélange en fusion par au moins un brûleur à flamme dirigée vers le mélange. Ledit brûleur offre un bon rendement et un effet de glaçage des volages vers la surface du bain de verre en cours de fusion ou fondu.

Dans un mode de réalisation, le comburant fourni au brûleur est de l'oxygène. L'effet de glaçage des volages est accru.

Dans un mode de réalisation, l'eau, le sable, le carbonate de sodium et l'oxyde de calcium sont présents dans des proportions massiques comprises entre 0 et 5%, 40 et 65%, 1 et 25%, et 1 et 20 % respectivement.

Dans un mode de réalisation, la décarbonatation du Na₂CO₃ est effectuée dans le four de verrerie en phase liquide.

Il est décrit un four de verrerie industrielle comprenant une cuve à verre fondu, une chambre de chauffe à combustion située au-dessus de la cuve et délimitée par des piédroits, des pignons et une voûte, un conduit d'évacuation des fumées en communication avec la chambre de chauffe, un brûleur à boucle disposé dans une direction parallèle au conduit d'évacuation des fumées, et un brûleur à flamme dirigée vers la cuve à verre fondu.

Dans un mode, le brûleur à flamme est disposé dans une voûte du four.

Dans un mode, le four de verrerie est stationnaire. La fragilité des fours rotatifs est évitée.

Des essais rapportés ci-dessous ont été menés.

### 1) Essai de température sur un lot de mélange précurseur de verre sodocalcique

On procède à la pesée de matières premières pour 20 kg de mélange précurseur. Le sable a été séché puis réhumidifié pour une teneur en eau reproductible. Les autres matières premières sont ajoutées en une fois à l'instant t₀. Le mélange est effectué pendant 100 secondes en toupie de type bétonnière. 16 kg sont prélevés et mis dans un récipient fermé. La température est relevée pendant 2 heures par un thermocouple positionné au centre du lot dans le récipient fermé. L'eau est la même pour les 5 lots. Le sable et le carbonate de sodium proviennent des mêmes lots industriels des mêmes fournisseurs. Cinq sources de calcium sont comparées :
- Calcaire
- Chaux vive A blanche livrée en vrac, D₅₀ à 0,1 mm
- Chaux vive B marron livrée en vrac, D₅₀ à 0,1 mm
- Chaux vive C livrée en grands sacs d'environ 1 tonne, calibre 4/8 mm
- Chaux vive D, D₅₀ à 1,2 mm.

La notation D₅₀ signifie que 50% de la matière en masse présente une granulométrie inférieure et 50% une granulométrie supérieure. Le calibre est une notation commerciale indiquant une prépondérance de la granulométrie située dans la plage 4 à 8 mm.

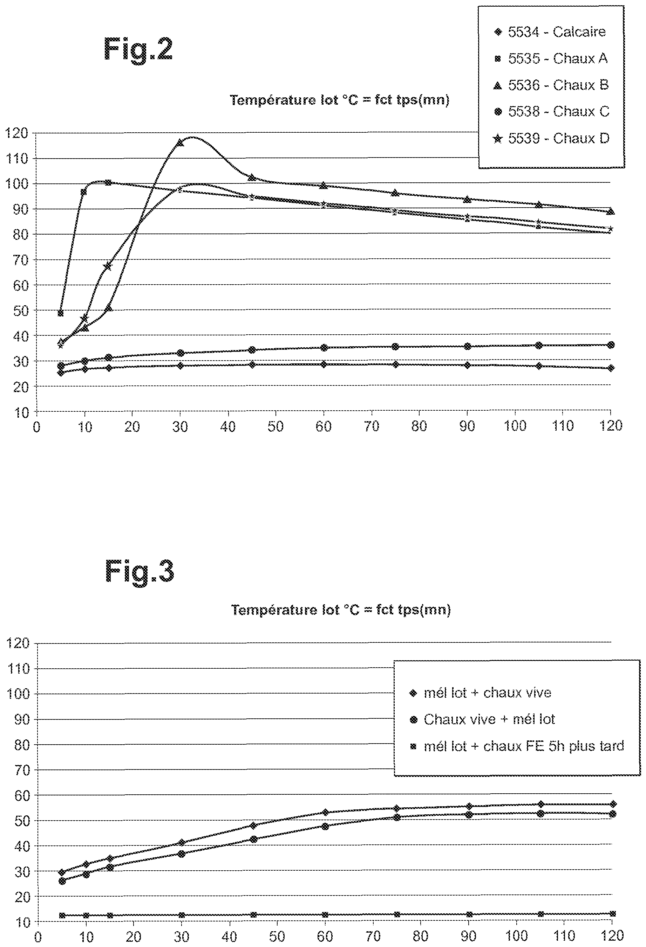

Les courbes de la figure 2 débutent à l'instant t = t₀ +5 minutes en raison du temps de remplissage du récipient, d'installation du thermocouple et de fermeture du récipient. Les courbes montrent une élévation de température inférieure à 5°C avec le calcaire, d'environ 15°C avec la chaux vive C livrée en grands sacs, d'environ 75°C à t = t₀ + 35 minutes avec la chaux vive D, d'environ 75°C à t = t₀ + 12 minutes avec la chaux vive A blanche livrée en vrac, de plus de 90°C à t = t₀ + 30 minutes avec la chaux vive B marron livrée en vrac.

Le faible échauffement avec la chaux vive C peut s'expliquer par la granulométrie très élevée et par une reprise d'humidité antérieure ayant en partie hydraté la chaux et faisant perdre un éventuel gain énergétique. Une chaux éteinte introduite dans un four verrier est déshydratée sous l'effet de la chaleur ce qui impacte le bilan énergétique par l'énergie nécessaire à la déshydratation et l'énergie chauffant l'eau supplémentaire à la température du four. Toutefois une chaux de forte granulométrie est moins sujette à une hydratation involontaire et l'hydratation est plus lente qu'avec une chaux de faible granulométrie.

Les différences d'échauffement et de temps d'échauffement entre les chaux vives A et B livrées en vrac, blanche et marron, s'expliquent par une composition différente sans être très significatives.

Les trois lots d'essais ayant subi un échauffement élevé fournissent un mélange générant beaucoup de volages, c'est-à-dire de poussières en partie perdues par l'aspiration des cheminées et ne participant pas au verre obtenu. Par ailleurs, l'échauffement élevé rend le mélange difficile à manipuler pendant plusieurs heures. On pourrait profiter de cet échauffement élevé pour enfourner un mélange chaud et améliorer le bilan thermique du four de verrerie. Le gain serait de l'ordre de 1 à 1,5 %.

### 2) Essai de phasage du même mélange

A la suite d'une manipulation interrompue de manière inopinée, la chaux a été introduite dans le mélange avec retard. Il a été procédé au mélange de l'eau, du sable et du carbonate de sodium. Le sable et le carbonate de sodium proviennent des mêmes lots industriels que dans le premier essai. La chaux est de calibre 0/5 mm. La chaux a été ajoutée 5 heures plus tard et la suite de l'essai menée comme précédemment. Il n'a pas été relevé d'échauffement, voir la courbe inférieure de la figure 3.

Au vu de ce résultat, la Demanderesse a mené deux autres essais en incorporant pour l'un la même chaux à un prémélange eau, sable et carbonate de sodium et pour l'autre en incorporant un prémélange eau, sable et carbonate de sodium à la même chaux sans retard entre la fabrication du prémélange et l'incorporation voir les courbes supérieures de la figure 3. Il se produit alors un échauffement significatif dans les deux cas, d'environ 40°C. La notion de « même » chaux est ici une chaux de la même livraison d'un fabricant, ayant donc une granulométrie très proche, de calibre 0/3 mm, et des conditions de stockage identiques. La chaux provient de l'échantillon n°1 du tableau du chapitre 4.

Une temporisation dans la préparation du mélange avec retard d'introduction de la chaux est intéressante pour éviter l'échauffement. Le lot de mélange sans échauffement a ensuite été chargé dans un four de verrerie. La proportion de volages a été comparable à celle d'un verre élaboré à partir de calcaire.

### 3) Essai d'enfournement

A partir d'une même composition de verre sodocalcique, la Demanderesse a cherché à comparer des granulométries de chaux différentes dans le même four. Les autres matières premières sont identiques d'un essai à l'autre. Une chaux de calibre 0/5 mm a fourni une production de verre de 23 tonnes/jour et une chaux de calibre 2/6 mm du même fournisseur a fourni une production de verre de 20,5 tonnes/jour. Lesdites chaux proviennent des échantillons n°4 et 6 du tableau du chapitre 4 respectivement. Une chaux fine fond plus vite dans le four qu'une chaux grossière mais contient plus d'air. L'air doit être évacué du verre en fusion par un dégazage plus long.

Par ailleurs, la Demanderesse préfère une chaux contenant le maximum de particules de granulométrie supérieure à 0,1 mm pour éviter les volages, inférieure à une valeur maximale comprise entre 4 et 6 mm pour une fusion rapide, et relativement étalée entre ces bornes pour réduire la quantité d'air enfournée et devant être dégazé du verre.

Dans le four verrier, le mélange a fondu plus rapidement qu'un mélange de granulométrie équivalente à base de calcaire, de composition menant à un verre sensiblement identique. Cette accélération se traduit par une augmentation de la production journalière d'un four de l'ordre 22%.

Dans des essais menés dans un même four de laboratoire en l'absence de dolomie, des échantillons de verre en fusion ont été prélevés à intervalles de 30 minutes dans le four. Deux lots de verre de même composition à base du même calcaire ont nécessité 2h30 et 3h de chauffe pour présenter une fusion correcte. Les prélèvements antérieurs à ces durées présentent des infondus et, après refroidissement, se brisent en poudre. Un lot de verre de même composition à base du même calcaire préalablement calciné à 1000°C avec une perte au feu de 43,5%, de granulométrie 0,1/2 mm et un lot verre de même composition à base de chaux vive C. La chaux vive C comprend en masse : CaO 97,1%, MgO 1,8%, SiO₂ 0,5%, Al₂O₃ 0,2% et Fe₂O₃ 0,16 ppm. La chaux vive C présente une granulométrie de plus de 50 % ne passant pas le tamis de 3,15 mm ; 18 %ne passant pas le tamis de 2 mm après passage au tamis de 3,15 mm ;18 %ne passant pas le tamis de 2 mm après passage au tamis de 3,15 mm ; moins de 5%ne passant pas le tamis de 1,6 mm après passage au tamis de 2 mm ; moins de 5%ne passant pas le tamis de 0,8 mm après passage au tamis de 1,6 mm ; moins de 5%ne passant pas le tamis de 0,5 mm après passage au tamis de 0,8 mm ; moins de 5%ne passant pas le tamis de 0,315 mm après passage au tamis de 0,5 mm ; moins de 5%ne passant pas le tamis de 0,2 mm après passage au tamis de 0,315 mm ; moins de 5%ne passant pas le tamis de 0,1 mm après passage au tamis de 0,2 mm ; moins de 10%ne passant pas le tamis de 0,08 mm après passage au tamis de 0,1 mm ; moins de 5%passant le tamis de 0,08 mm. Les deux derniers lots de verre ont fourni du verre de qualité convenable à partir de 2h de chauffe. L'absence de dolomie est une simplification non susceptible de changer la constatation de la réduction de temps de fusion.

### 4) Mesure de granulométrie

| TAMIS mm | Chaux n°1 | Chaux n°2 | Chaux n°3 | Chaux n°4 | Chaux n°5 | Chaux n°6 | Chaux n°7 | Chaux n°8 |
|---|---|---|---|---|---|---|---|---|
| | %refus | %refus | %refus | %refus | %refus | %refus | %refus | %refus |
| 4,000 | 0 | 0 | 0 | 3,3 | 19,6 | 6,9 | 17,8 | 24,4 |
| 3,150 | 0 | 0 | 0,1 | 2,3 | 25,1 | 10,7 | 18,3 | 19,3 |
| 2,000 | 18,1 | 15,9 | 6,9 | 9,1 | 35,4 | 22,9 | 25,6 | 21,8 |
| 0,800 | 37,2 | 32,7 | 22,9 | 20,1 | 8,1 | 19,4 | 13,6 | 11,3 |
| 0,500 | 10,9 | 10,5 | 11,5 | 8,8 | 1,2 | 5,5 | 3,2 | 2,6 |
| 0,400 | 3,9 | 3,5 | 4,5 | 3,5 | 0,3 | 1,9 | 1,1 | 1,0 |
| 0,200 | 9,7 | 19,8 | 15,7 | 10,5 | 0,9 | 5,3 | 3,1 | 3,0 |
| 0,100 | 8,3 | 13,5 | 27,9 | 23,3 | 1,0 | 7,9 | 10,9 | 8,8 |
| Reste | 20,8 | 4 | 9,9 | 18,5 | 8,2 | 19,3 | 6,2 | 7,6 |

| TAMIS mm | Chaux n°9 | Chaux n°10 | Chaux n°11 | Chaux n°12 | Chaux n°13 | Chaux n°14 | Chaux n°15 | Chaux n°16 |
|---|---|---|---|---|---|---|---|---|
| | %refus | %refus | %refus | %refus | %refus | %refus | %refus | %refus |
| 4,000 | 29,5 | 4,0 | 0,2 | 0,1 | 1,3 | 0,8 | 0,9 | 0,9 |
| 3,150 | 21,5 | 3,4 | 1,3 | 0,5 | 1,0 | 0,8 | 1,4 | 1,3 |
| 2,000 | 22,4 | 15,0 | 4,3 | 9,1 | 10,0 | 2,9 | 5,5 | 3,9 |
| 0,800 | 15,2 | 32,8 | 13,1 | 26,7 | 29,8 | 12,7 | 15,3 | 14,6 |
| 0,500 | 2,6 | 12,9 | 8,2 | 14,6 | 14,9 | 9,7 | 10,1 | 9,8 |
| 0,400 | 0,7 | 4,2 | 3,6 | 5,5 | 4,4 | 3,9 | 3,6 | 3,9 |
| 0,200 | 1,8 | 10,1 | 12,2 | 16,9 | 13,0 | 13,2 | 14,2 | 11,8 |
| 0,100 | 4,2 | 13,8 | 34,9 | 12,6 | 13,6 | 24,8 | 31,7 | 40,8 |
| Reste | 2,1 | 3,6 | 22,0 | 14,0 | 11,9 | 30,5 | 17,2 | 11,8 |

Ces mesures de granulométrie montrent que ce paramètre est évolutif en fonction du conditionnement de la chaux - grands sacs, vrac, etc. -, de la manipulation et du déplacement de la chaux, et des conditions et durée de stockage. La granulométrie souhaitée comprend le plus possible de particules entre 0,1 mm et 4 mm, par exemple 90 % en masse ne passe pas au tamis de 0,1 mm et moins de 5 % en masse ne passe pas au tamis de 4 mm. Une granulométrie préférée est : plus de 95 % en masse ne passe pas au tamis de 0,1 mm et moins de 1 % en masse ne passe pas au tamis de4 mm.

### 5) Quantité de volages

Le carneau d'un four industriel de verrerie a été muni d'une dérivation permettant de récupérer et peser une partie des volages. Le même dispositif de dérivation a été utilisé pendant la campagne d'essais. Les essais ont été menés avec en entrée les mêmes matières premières à l'exception du changement du calcaire vers le CaO et obtenant un verre de même composition en sortie et sur une durée de 24h. Une première série d'essais a été menée avec un mélange classique comprenant du calcaire et un four à boucle et à brûleur en voûte. Une deuxième série d'essais a été menée avec un mélange comprenant la chaux n°4 et le four à boucle et à brûleur en voûte. La composition du mélange est 1367 kg de sable, 112 kg de dolomie, 416 kg de carbonate de soude, 4 kg de sulfate de soude, 160 kg de chaux vive, 30 kg d'alumine. Les quantités de volages récupérées constituent des mesures relatives pour comparaison entre elles. Elles n'ont pas été ramenées à la tonne de verre produite. Ce sont des valeurs brutes en grammes :
Série n°1 : moyenne : 43,15 ; écart moyen : 14 ,65. Les poussières recueillies sont dues à deux effets : l'envol de particules et la vaporisation puis recondensation des espèces gazeuses sur le doigt froid qui a été placé dans le carneau pour recueillir les poussières. Ce deuxième effet a été identifié par la Demanderesse.
Série n°2 : moyenne : 45,2 ; écart moyen : 7,85. L'analyse faite pour la série n°1 s'applique. Le carneau n'a pas eu besoin d'être nettoyé pendant une campagne d'onze mois. Les poussières récupérées contiennent majoritairement du sulfate de sodium plus aisé à nettoyer que le sulfate de calcium habituellement retrouvé dans le carneau. On en déduit que la perte de Ca par volage est réduite.

En conclusion, la mesure de quantité de particules dans le carneau est difficile et une interprétation est nécessaire. Dans les conditions de l'essai, l'emploi de CaO issu de calcination du calcaire ne génère pas les mêmes volages de particules dans le four que l'utilisation de CaCO₃ avec le brûleur en voûte.

Après ses essais, la Demanderesse a mis au point la préparation d'un mélange précurseur de verre pour four verrier, dans lequel, en premier lieu, on mélange de l'eau, du sable et du carbonate de sodium dans des proportions massiques comprises entre 0 et 5 %, 40 et 65 %, et plus de 0 et au plus 25 % respectivement, et, en deuxième lieu, on ajoute de l'oxyde de calcium dans une proportion massique comprise entre 1 et 20 % du total. L'ajout de CaO est effectué au moins une heure après le premier mélange. Les matières sont à température ambiante. L'eau est absorbée par le carbonate de sodium et devient peu disponible pour le CaO.

L'eau permet une moindre sensibilité aux volages par effet de cohésion sur les particules fines.

Le mélange précurseur contient pour un verre sodocalcique : eau 0 à 3 %, sable 65 à 75 %, carbonate de sodium 10 à 15 %, chaux 10 à 25%, magnésie 0 à 6 %, affinants, colorants et décolorants 0 à 2 %.

Un verre borosilicate contient : 7 à 13 % de trioxyde de bore (B₂O₃), 4 à 8 % d'oxydes alcalins (Na₂O; K₂O), 2 à 7 % alumine (Al₂O₃), 0 à 5 % d'autres oxydes alcalins (CaO, MgO...). Un verre borosilicate contenant du CaO peut être fabriqué à partir d'un mélange précurseur selon l'invention.

D'autres caractéristiques et avantages de l'invention apparaîtront à l'examen de la description détaillée ci-après, et des dessins annexés, sur lesquels :

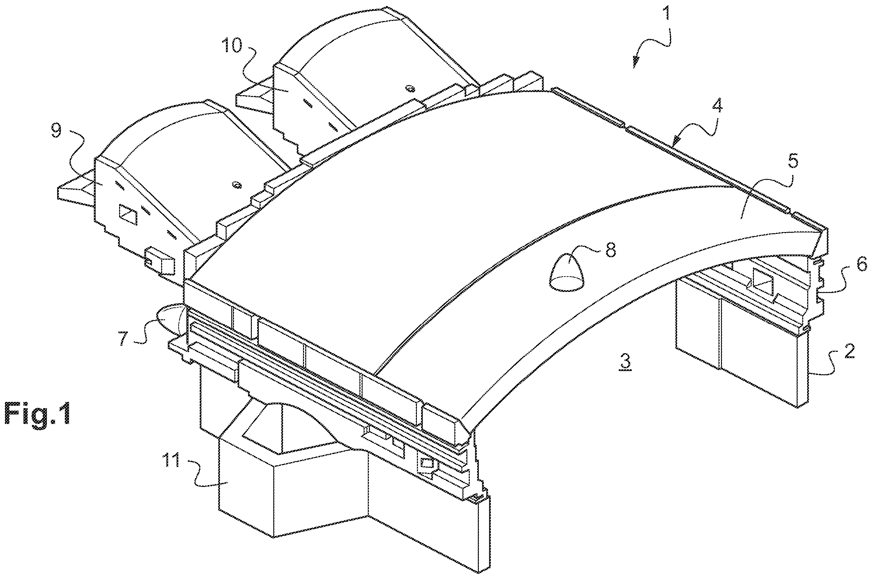

- La figure 1 est une vue schématique en perspective d'un four de verrerie.
- La figure 2 montre des courbes d'échauffement en fonction du temps pour du calcaire et quatre chaux.
- La figure 3 montre des courbes d'échauffement en fonction du temps pour trois mélanges contenant de la chaux.
- La figure 4 montre plusieurs courbes d'échauffement en fonction du temps pour dix essais en fonction de la température des matières premières, de l'humidité, du délai entre le prémélange et l'introduction de la chaux vive, et de la granulométrie du carbonate de sodium.
- La figure 5 montre une sélection des courbes de la figure 4 sur le paramètre humidité.
- La figure 6 montre une sélection des courbes de la figure 4 sur le paramètre température.
- La figure 7 montre une sélection des courbes de la figure 4 sur le paramètre granulométrie du carbonate de sodium.

Les dessins annexés pourront non seulement servir à compléter l'invention, mais aussi contribuer à sa définition, le cas échéant.

Le four de verrerie 1 présente au moins un brûleur en boucle et au moins un brûleur en voûte. Le brûleur en boucle est orienté sensiblement horizontalement, à proximité d'une entrée de comburant. La flamme s'étend sensiblement horizontalement au-dessus du bain. Le bain est composé au début de chauffe des matières premières à fondre, c'est-à-dire du mélange précurseur de verre, puis du verre fondu en cours d'élaboration, transformé progressivement en verre industriel ayant la qualité souhaitée. Le brûleur envoûte est orienté sensiblement verticalement dans une paroi sommitale du four. La flamme s'étend sensiblement verticalement vers le bain.

Le four de verrerie 1 comprend une cuve 2 à verre fondu pour une production par lot. Le four verrier 1 comprend une chambre de combustion 3 située au-dessus du bain de verre fondu et une paroi supérieure 4 composée d'une voûte 5 et de parties verticales dites pieds droits (longueur) ou pignons (largeur) 6 délimitant la chambre de combustion 3. Le four de verrerie 1 comprend au moins un brûleur 7 en boucle alimenté en fioul ou gaz. Le four de verrerie 1 comprend au moins un brûleur 8 en voûte alimenté en fioul ou gaz. Le four de verrerie 1 comprend une entrée de comburant 9. Le comburant peut être de l'air et/ou de l'oxygène.

Le brûleur 8 est installé dans la voûte 5. Le brûleur 8 est à flamme dirigée vers la surface supérieure du bain, de haut en bas. Le brûleur 8 est positionné de façon que sa flamme soit située en dehors de la zone où le mouvement de gaz générée par le brûleur 7 est maximal. Le brûleur 8 est positionné sensiblement au sommet de la voûte 5. Le brûleur 8 est positionné sensiblement au milieu du four 1 dans le sens de la largeur.

Dans l'un des piédroits, est ménagée une ouverture ou niche 11 permettant l'alimentation du four 1 en matières premières à fondre, notamment en mélange précurseur. Les organes de retrait du verre affiné n'ont pas été représentés.

La cuve 2 et la paroi supérieure 4 sont réalisées en matériaux réfractaires, renforcés par une structure métallique extérieure distante des zones de haute température. Le brûleur 7 est à flamme orientée horizontalement dans la chambre de combustion 3. Le brûleur 7 est installé sous l'entrée de comburant 9.

Le four de verrerie 1 comprend une sortie de fumées 10 ménagée dans un des parois verticales 6 au-dessus du bain de verre fondu. Le brûleur 7 et la sortie de fumées 10 peuvent être prévus sur un même petit côté de manière que la flamme dudit brûleur 7 et les fumées effectuent un trajet en U dans la chambre de combustion 4. Le trajet en U est dit en boucle dans la terminologie habituelle. Le brûleur 7 et la sortie de fumées 10 peuvent être parallèles. Le brûleur 7 et la sortie de fumées 10 débouchent dans la chambre de combustion 3.

En aval de la sortie de fumées 10 dans le sens de déplacement des fumées, l'installation peut comprendre un carneau. Le carneau est un conduit de fumées sensiblement horizontal. Le carneau est en communication de fluide avec la chambre de combustion 3 par la sortie de fumées 10. Le carneau est réalisé en matériaux réfractaires renforcés par une structure métallique extérieure distante des zones de haute température. Le carneau est dépourvu de vanne. Le carneau conduit les fumées vers une cheminée ou un récupérateur de chaleur ou un régénérateur pour chauffer le comburant.

La mise en œuvre combinée du brûleur 7 en boucle et du brûleur 8 en voûte offre un rendement élevé et un glaçage de la surface du bain. Le glaçage est une fusion rapide de la zone de surface du bain soumise à l'action de la flamme du brûleur 8 en voûte. La fusion rapide empêche la libération de poussières de ladite zone. Le glaçage est obtenu plus rapidement.

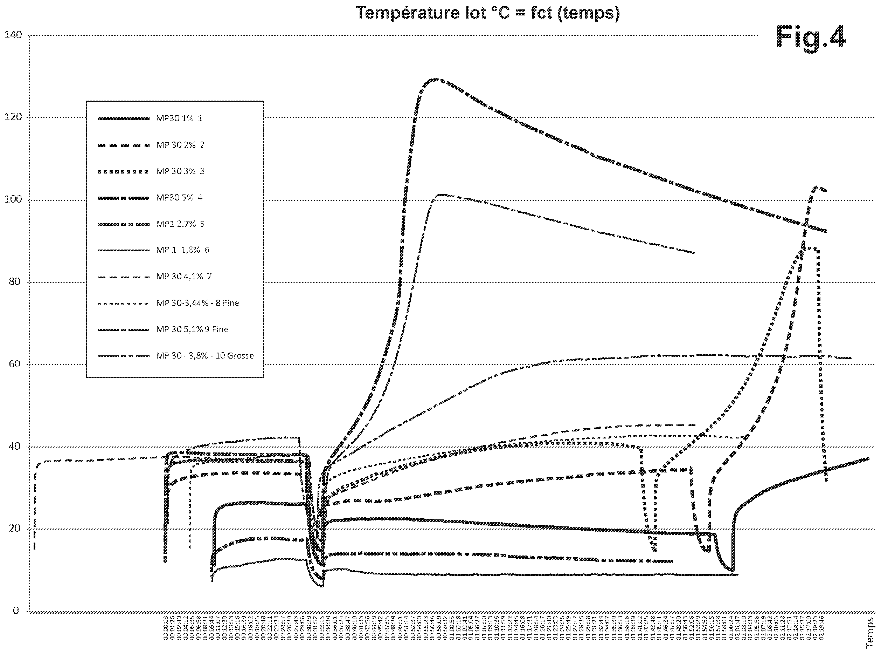

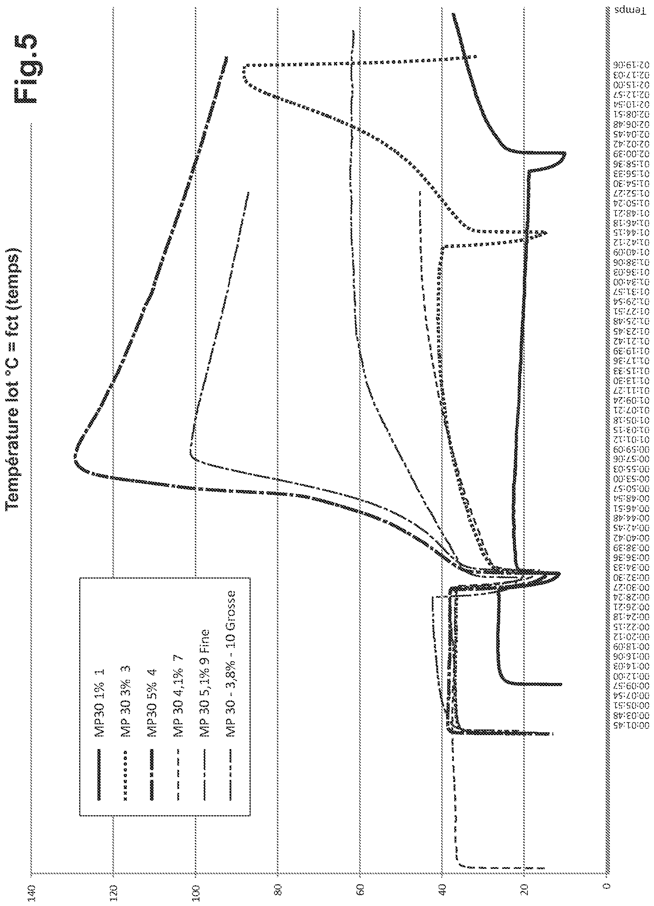

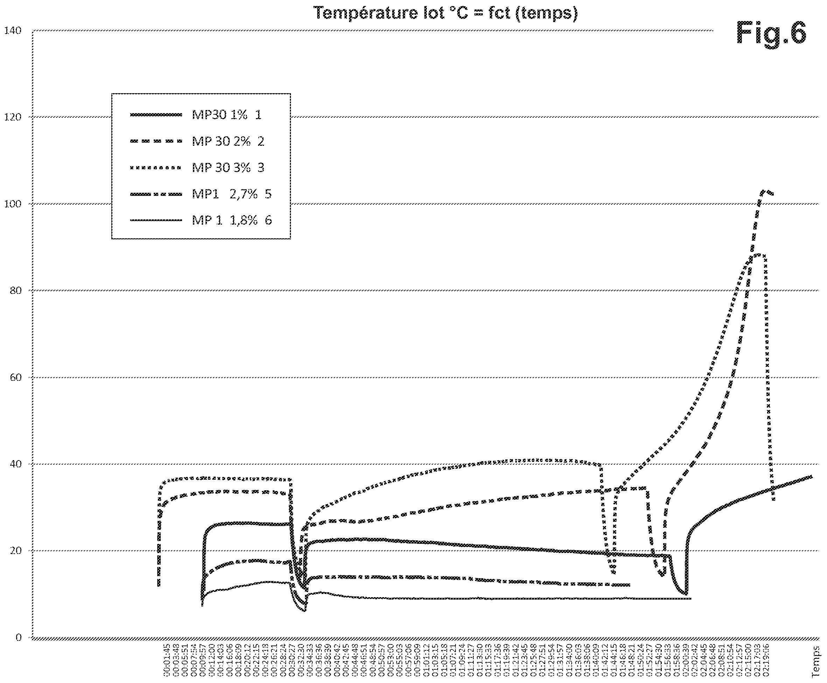

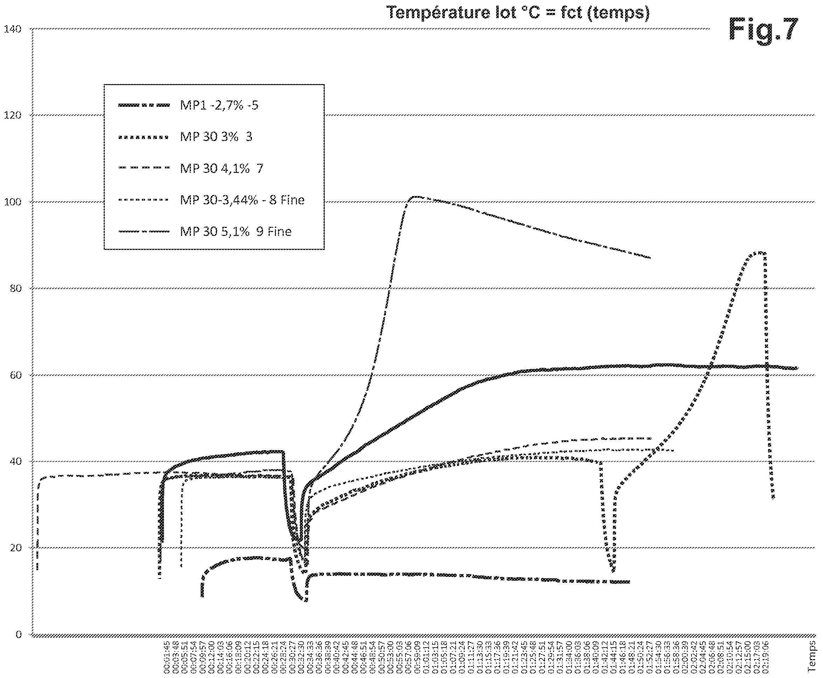

Par ailleurs, des essais relatifs à la durée du délai D entre le mélange (action de mélanger) de l'eau, du sable et du carbonate de sodium et l'ajout de l'oxyde de calcium (chaux vive) ont été menés en relation avec la température Tₘₚ des matières premières correspondant à la température ambiante moyenne de stockage et le taux d'humidité H du mélange sable/soude mesurée. De l'alumine, par exemple sous forme de feldspath, feldspathoïde et/ou alumine calcinée est également mélangée à l'eau, au sable et au carbonate de sodium. Ces essais sont reportés en figures 4 à 7. La température mesurée est en ordonnée et le temps en abscisse. Les courbes ont été calées en abscisse sur une référence commune à l'instant d'introduction de la chaux vive dans le mélangeur contenant au préalable un prémélange. Le délai D va de 20 min. pour les essais 1, 5 et 6 à 60 min. pour l'essai 7.

Ici, l'eau a été apportée à un sable sec et mélangée pendant 3 minutes. Puis du carbonate de sodium et de l'alumine ont été mélangés au sable humide pendant 2 minutes. La mesure du taux d'humidité H et de la température T du prémélange a été effectuée. L'eau présente avant l'introduction du carbonate de sodium et de l'alumine réagit avec le carbonate de sodium par une réaction d'hydratation du carbonate de sodium avec une élévation de température de quelques degrés. Le carbonate de sodium réagit avec ladite eau au moins dans les essais des courbes 1 à 3. Il reste de l'eau libre dans l'essai de la courbe 4 car l'ajout ultérieur d'oxyde de calcium provoque une forte et vive élévation de température. Il ne reste sensiblement pas d'eau libre dans les essais des courbes 1 à 3 car l'ajout ultérieur d'oxyde de calcium ne provoque pas d'élévation de température. De plus, un apport d'eau, à titre de vérification, plus d'une heure après l'ajout d'oxyde de calcium provoque une forte et vive élévation de température.

Plus tard, l'oxyde de calcium a été ajouté et mélangé. L'action de mélanger a été effectuée dans un mélangeur de type bétonnière de contenance 150 litres. A chaque essai les quantités mises en œuvre sont de : 19 à 20 kg. La nature et l'origine des matières premières sont les mêmes pour les essais 1 à 10. Enfin, les essais 1 à 10 ont été effectués par la même personne suivant le même protocole, avec la même bétonnière à la même vitesse de rotation. La mise en œuvre et la précision de mesure correspondent à des essais semi industriels plus proches de la réalité d'une campagne de production que d'un laboratoire de recherche fondamentale, un but étant d'identifier des phénomènes se produisant à l'échelle industrielle. Les masses mises en œuvre sont de 13 kg de sable, 4 kg de carbonate de sodium, 2 kg d'oxyde de calcium, 0,24 kg d'alumine et de l'eau pour atteindre le pourcentage visé.

Le sable présente une composition : SiO₂ au moins 99%, Al₂O₃ moins de 1%, K₂O moins de 0,1%, TiO₂ moins de 0,03%, Fe₂O₃ moins de 0,015%. Les autres éléments sont à l'état de traces. Le sable présente une granulométrie D50 comprise entre 0,20 et 0,25 mm. Le sable présente une granulométrie avec au plus 3% de refus au tamis de 0,355 mm, et au plus 1% de passage au tamis de 0,125 mm.

Le carbonate de sodium présente une composition : Na₂CO₃ 99,75%, NaCl 0,03% et H₂O moins de 0,1%. Les autres éléments sont à l'état de traces. Le carbonate de sodium présente une granulométrie D50 comprise entre 0,15 et 0,25 mm. Le carbonate de sodium présente une granulométrie avec au plus 0,5% de refus au tamis de 0,600 mm, au moins 90% de refus au tamis de 0,150 mm et au plus 2% de passage au tamis de 0,075 mm.

L'oxyde de calcium présente une composition : CaO au moins 93%, MgO moins de 2%, CO₂ moins de 2%, Fe₂O₃ moins de 0,1%, S moins de 0,06%. Les autres éléments sont à l'état de traces. L'oxyde de calcium présente une granulométrie D50 comprise entre 0,08 et 0,12 mm. L'oxyde de calcium présente une granulométrie avec au plus 1,6% de refus au tamis de 5,00 mm, et au plus 55% de passage au tamis de 0,090 mm.

On mesure la température maximale Tₘₐₓ atteinte dans l'heure qui suit l'ajout d'oxyde de calcium. La mesure de température est effectuée en insérant une sonde de température dans le mélange contenu dans le mélangeur, le mélangeur ayant été arrêté. Le premier creux de température constaté sur toutes les courbes de la figure 4 correspond à l'étape de retrait de la sonde de température, ajout de l'oxyde de calcium, actionnement du mélangeur pendant 2 minutes, insertion à nouveau de la sonde de température. Le deuxième creux de température constaté sur les courbes 1, 2 et 3 correspond à une étape supplémentaire d'ajout d'eau en excès au-delà des quantités indiquées pour vérifier la présence d'oxyde de calcium plus d'une heure après l'introduction dudit oxyde de calcium. Cet ajout d'eau se traduit par une réaction exothermique d'hydratation de l'oxyde de calcium le transformant en hydroxyde de calcium. L'élévation de température constatée après ledit ajout d'eau en excès permet d'en déduire que l'oxyde de calcium restait présent au préalable dans le mélange.

De plus l'observation fine de l'ensemble des courbes avant l'ajout d'oxyde de calcium montre une élévation de température indiquant une réaction eau-carbonate de sodium. La température atteinte croît avec la proportion d'eau, notamment par comparaison entre les courbes 1, 2, 3, 7 et 4 d'une part et 6 et 5 d'autre part.

Avant l'ajout d'oxyde de calcium, un maximum de température est atteint, soit très rapidement pour la courbe 4 en environ 1 minute après la fin de l'action de mélanger, c'est à dire environ 3 minutes après la mise en contact du carbonate de sodium et de l'alumine avec le sable et l'eau, soit plus lentement pour les autres courbes en 10 minutes environ après la fin de l'action de mélanger. La baisse de température après le maximum indique que la réaction eau-carbonate de sodium a cessé. La fin de ladite réaction indique que soit toute l'eau disponible a été captée, soit que tout le carbonate de sodium disponible a été hydraté et il reste de l'eau libre. Ainsi la réaction rapide de la courbe 4 correspond à l'hydratation du carbonate de sodium avec excès d'eau.

Après l'ajout de l'oxyde de calcium, on mesure la température :
1) D=20 minutes Tₘₚ=30°C H=1%. Tₘₐₓ < Tₘₚ+15°C.
2) D=30 minutes Tₘₚ=30°C H=2%. Tₘₐₓ < Tₘₚ+15°C.
3) D=30 minutes Tₘₚ=30°C H=3%. Tₘₐₓ < Tₘₚ+15°C.
4) D=30 minutes Tₘₚ=30°C H=5%. Tₘₐₓ > 100°C.
5) D=20 minutes Tₘₚ=1°C H=2,7%. Tₘₐₓ < Tₘₚ+15°C.
6) D=20 minutes Tₘₚ=1°C H=1,8%. Tₘₐₓ < Tₘₚ+15°C.
7) D=60 minutes Tₘₚ=30°C H=4,1%. Tₘₐₓ < Tₘₚ+15°C.
8) D=25 minutes Tₘₚ=30°C H=3,44%. Tₘₐₓ < Tₘₚ+15°C.
9) D=30 minutes Tₘₚ=30°C H=5,1%. Tₘₐₓ > 100°C.
10) D=30 minutes Tₘₚ=30°C H=3,8%. Tₘₐₓ >60°C.

Un échauffement inférieur à 10°C se produit au mélange (action de mélanger) eau-sable-carbonate de sodium dans les essais 2 à 4 et 7. Les essais 4, 9 et 10 sont insatisfaisants en raison d'un échauffement excessif à l'introduction de l'oxyde de calcium. La comparaison des essais 2 et 6 d'une part et 3 et 5 d'autre part montre que la température initiale des matières premières Tₘₚ a une influence faible à nulle sur la température maximale Tₘₐₓ. La comparaison des essais 2, 3 et 4 d'une part et 5 et 6 d'autre part montre que l'humidité a peu d'influence en dessous d'un seuil. Le seuil est situé entre plus de 4,1 et moins de 5% pour D=30 minutes. Toutefois, l'influence de la durée D est plafonnée par l'aptitude du carbonate de sodium à absorber de l'eau libre disponible. Toutefois, les essais montrent que la quantité d'eau doit être largement inférieure au seuil maximal théorique.

Par ailleurs, la granulométrie du carbonate de sodium a une influence sur la durée D. Dans une certaine mesure, plus la granulométrie est fine, plus l'eau est absorbée rapidement mais risque d'initier une prise en masse. En cas de prise en masse, l'eau reste disponible pour la chaux vive, d'où un échauffement que l'on cherche à éviter.

En cas de granulométrie élevée du carbonate de sodium, la Demanderesse fait l'hypothèse que la réaction avec l'eau est limitée, ladite réaction se produisant en surface des grains de carbonate de sodium mais pas ou peu à l'intérieur desdits grains. La granulométrie du sable a peu d'influence en raison de l'aptitude quasi nulle du SiO₂ à s'hydrater.

L'essai n°2 a été effectué avec une bétonnière froide, environ 0°C, ce qui a ralenti la réaction d'hydratation du carbonate de sodium. L'essai n°2 n'est pas entièrement représentatif dans la partie de courbe antérieure à l'apport d'oxyde de calcium. De manière générale, un apport d'énergie peut être effectué sous la forme d'un chauffage de la bétonnière et/ou du mélange à température plus élevée que la température ambiante par exemple par brûleur à flamme, chauffage électrique, ou injection de vapeur d'eau dans le mélange, en restant à une température de mélange inférieure à 47°C.

Ainsi, les essais à 4,1% d'humidité dans le mélange antérieurement à l'ajout de chaux vive pour une durée D d'au moins une heure et à 3% d'humidité pour une durée D d'au moins 10 minutes avec une granulométrie courante de carbonate de sodium offrent des résultats satisfaisants. La faible influence de la durée D au-delà de 10 minutes en raison du maximum de température atteint avant 10 minutes, fait qu'un maximum de 4,1% d'humidité dans le mélange antérieurement à l'ajout de chaux vive pour une durée D de 10 minutes est intéressant et serait même robuste par rapport à des imprécisions de mesure ou aux tolérances industrielles.

Une analyse de la partie gauche des courbes apporte des enseignements. Entre l'instant 0 et l'instant de retrait de la sonde en vue de l'apport de CaO - à 20 ; 30 ; 60 minutes selon les essais - l'évolution de la température reflète la réaction d'hydratation du carbonate de sodium au contact du sable humide. Entre ces instants, on identifie la plage temporelle où se situe le maximum local de température T_{Na}. Le maximum local de température T_{Na} indique que la réaction d'hydratation du carbonate de sodium est sensiblement terminée:
1) D=20 minutes Tₘₚ=30°C H=1%. T_{Na} 5 à 7 minutes.
2) D=30 minutes Tₘₚ=30°C H=2%. T_{Na} 13 à 15 minutes.
3) D=30 minutes Tₘₚ=30°C H=3%. T_{Na} 5 à 7 minutes.
4) D=30 minutes Tₘₚ=30°C H=5%. T_{Na} 1 à 2 minutes.
5) D=20 minutes Tₘₚ=1°C H=2,7%. T_{Na} 11 à 13 minutes.
6) D=20 minutes Tₘₚ=1°C H=1,8%. T_{Na} environ 15 minutes.
7) D=60 minutes Tₘₚ=30°C H=4,1%. T_{Na} 17 à 19 minutes.
8) D=25 minutes Tₘₚ=30°C H=3,44%. T_{Na} 7 à 9 minutes.
9) D=30 minutes Tₘₚ=30°C H=5,1%. T_{Na} >25 minutes.
10) D=30 minutes Tₘₚ=30°C H=3,8%. T_{Na} 25 à 27 minutes.

La température initiale Tₘₚ des matières premières a une influence sur la vitesse de réaction eau-carbonate de sodium. A Tₘₚ = 30°C la réaction est plus rapide qu'à Tₘₚ = 1°C par comparaison entre les essais 2 et 6 ; 3 et 5. La rapidité de la réaction lors de l'essai n°4 corrobore une présence d'eau en excès permettant une hydratation rapide du carbonate de sodium. La relative lenteur de la réaction lors de l'essai n°7 montre un équilibre eau-carbonate de sodium. La stabilité entre les essais n°1 et n°3 montre qu'une durée D d'environ 10 minutes est suffisante et robuste avec des matières premières à température initiale de 30°C ou plus. Une telle stabilité entre les essais n°1 et n°3, et entre les essais n°6 et n°5 montre que, avec carbonate de sodium en excès par rapport à l'eau, la vitesse de réaction est peu dépendante de la teneur en eau.

Par ailleurs, lors de l'ajout ultérieur d'eau en excès dans les essais 2 et 3 et lors de l'ajout d'oxyde de calcium de l'essai 4, la température a augmenté très rapidement et simultanément un fort dégagement de poussières s'est produit. La partie droite de la courbe de l'essai 1 à partir de 1:49:20 n'est pas représentative pour des raisons propres à l'essai 1. Ce type de réaction est typique de l'hydratation de la chaux vive, réaction fortement exothermique. On vérifie donc l'hydratation immédiate de la chaux vive ajoutée à un mélange à 5% d'eau et l'absence d'hydratation de la chaux vive ajoutée à un mélange à 2 ou 3% d'eau. En outre, les courbes de température des essais 3 et 7 à 3% et 4,1% d'eau respectivement présentent des formes très semblables avant et après l'ajout de chaux vive. Cette similarité forte indique que le mélange à 4,1% d'eau ne contient pas d'eau libre.

Les essais 8 et 9 ont été menés avec des fines de carbonate de sodium passant au tamis de 0,250 mm tandis que l'essai 10 a été mené avec des grosses particules de carbonate de sodium ne passant pas au tamis de 0,500 mm et passant au tamis de 1,000 mm. La provenance et le lot de carbonate de sodium sont les mêmes que pour les essais 1 à 7. Un tamisage a été effectué.

Les essais 8 et 10 ont été choisis avec une humidité laissant prévoir un résultat satisfaisant alors que l'essai 9 a été choisi avec une humidité forte pour tester l'influence éventuelle de la granulométrie sur l'humidité maximale. La courbe de l'essai 8 est proche de la courbe de l'essai 3. L'essai 8 est interprété comme produisant une consommation complète de l'eau libre par le carbonate de sodium en un temps assez bref inférieur à 10 minutes et une élévation de température inférieure à 15°C par rapport à la température Tₘₚ initiale. La granulométrie fine ne présente pas d'impact majeur au taux d'humidité 3,44%. L'essai 9 à humidité élevée fait état d'une réaction d'hydratation du carbonate de sodium beaucoup plus lente qu'à l'essai 4. Ceci s'explique par une prise en masse du mélange précurseur accompagnée de phénomènes de croûtage susceptibles de ralentir la réaction.

L'essai 10 à forte granulométrie et 3,8% d'humidité donne une courbe différente des autres essais dans l'étape d'hydratation du carbonate de sodium. La température monte pendant plus de 25 minutes ce qui indique une poursuite de la réaction d'hydratation du carbonate de sodium. Lors du retrait de la sonde de température en vue d'introduire l'oxyde de calcium, il subsiste une incertitude sur le point de savoir si le maximum de température a été atteint. La lenteur de l'hydratation du carbonate de sodium a pour cause la moindre surface active disponible du carbonate de sodium en raison de la forte dimension des particules de carbonate de sodium.

Lors de l'ajout d'oxyde de calcium, l'essai 8 présente une élévation de température comparable aux essais 3 et 7, donc satisfaisante. La présence d'eau disponible pour hydrater l'oxyde de calcium est très faible. L'essai 9 présente une élévation de température comparable à l'essai 4, donc trop élevée. La diminution de la granulométrie n'apporte pas l'effet intéressant à l'étape d'ajout d'oxyde de calcium et présente des risques de prise en masse. De tels risques peuvent être réduits en choisissant un taux d'humidité de 2% ou moins.

Lors de l'ajout d'oxyde de calcium, l'essai 10 présente une élévation de température d'environ 30 à 35°C au-dessus de la température Tₘₚ. Cette élévation mène à une température supérieure à 60°C en partant de Tₘₚ = 30°C. A 60°C, le risque de dégager des poussières irritantes est élevé. L'augmentation de la granulométrie apporte un risque d'échauffement excessif à l'ajout d'oxyde de calcium, en particulier si la température Tₘₚ est supérieure à 15°C. Un tel risque peut être réduit en choisissant un taux d'humidité de 3% ou moins.

Des essais 8 à 10, se déduit l'absence d'intérêt et certains inconvénients des granulométries exclusivement fines et exclusivement grossières. Il est donc préférable de prévoir une source de carbonate de sodium de granulométrie centrée entre 0,250 mm et 0,500 mm. Ceci peut inclure des fractions minoritaires de particules les unes inférieures à 0,250 mm et les autres supérieures 0,500 mm comme le montre les essais 1 à 7. Ainsi, une granulométrie de carbonate de sodium avec moins de 5% passant au tamis de 0,075 mm, moins de 15 % passant au tamis de 0,150 mm et moins de 5% ne passant pas au tamis de 0,600 mm convient.

En cas d'approvisionnement en carbonate de sodium à forte granulométrie, alors l'humidité sera limitée à 3%. L'hydratation du carbonate de sodium sera plus rapide que lors de l'essai 10 et la température après introduction de l'oxyde de calcium restera dans une plage de +0 à +15°C par rapport à la température ambiante.

## Revendications

1. Procédé de préparation d'un mélange précurseur pour la fabrication de verre comprenant la préparation d'un mélange précurseur de verre pour four verrier, dans lequel on mélange de l'eau, du sable et du carbonate de sodium dans des proportions massiques comprises entre plus de 0 et 5 %, 40 et 65 %, et plus de 0 et au plus 25 % respectivement, et, après un délai d'au moins 10 minutes, on ajoute de l'oxyde de calcium dans une proportion massique comprise entre 1 et 20 % du total.

2. Procédé selon la revendication 1, dans lequel ledit délai est d'au moins une heure.

3. Procédé selon la revendication 1, dans lequel ledit délai est compris entre au moins 10 minutes, et moins de une heure pour un mélange eau, sable et carbonate de sodium à au plus 4,1% d'humidité.

4. Procédé selon l'une des revendications précédentes, dans lequel le carbonate de sodium présente une granulométrie avec moins de 5% passant au tamis de 0,075 mm, moins de 15 % passant au tamis de 0,150 mm et moins de 5% ne passant pas au tamis de 0,600 mm.

5. Procédé selon l'une des revendications précédentes, dans lequel ledit mélange eau, sable et carbonate de sodium présente au plus 3% d'humidité avec du carbonate de sodium de granulométrie majoritairement supérieure à 0,500 mm et inférieure à 1,000 mm et au plus 2% d'humidité avec du carbonate de sodium de granulométrie majoritairement inférieure à 0,250 mm.

6. Procédé selon l'une des revendications précédentes, dans lequel ledit délai est de moins de 72 heures et la température initiale des matières premières est d'au moins 30°C.

7. Procédé selon l'une des revendications précédentes, dans lequel l'oxyde de calcium présente une granulométrie telle que 70 à 90% en masse ne passe pas au tamis de 0,1 mm, préférablement 30 à 80% en masse ne passe pas au tamis de 0,5 mm, plus préférablement 30 à 70% en masse ne passe pas au tamis de 2 mm ou l'oxyde de calcium présente une granulométrie telle que plus 90 % en masse ne passe pas au tamis de 0,1 mm et moins de 5 % en masse ne passe pas au tamis de 4 mm, préférablement plus 95 % en masse ne passe pas au tamis de 0,1 mm et moins de 1 % en masse ne passe pas au tamis de 4 mm.

8. Procédé selon l'une des revendications précédentes, dans lequel l'oxyde de calcium présente une granulométrie moyenne comprise entre 1 et 1,5 mm.

9. Procédé selon l'une des revendications précédentes, dans lequel le mélange précurseur est mis en œuvre dans un four verrier moins de 1 heure après sa préparation pour une granulométrie de 90% ou plus en masse passant au tamis de 0,1 mm, préférablement moins de 2 heures après sa préparation pour une granulométrie de 70 à 90% en masse passant au tamis de 0,1 mm.

10. Procédé selon l'une des revendications précédentes, dans lequel le mélange précurseur est mis en œuvre dans un four verrier moins de 8 heures après sa préparation pour une granulométrie de 70% ou plus en masse passant au tamis de 2 mm.

11. Procédé selon l'une des revendications précédentes, dans lequel ledit sable est sec.

12. Procédé selon l'une des revendications 1 à 9, dans lequel l'eau est présente dans ledit sable, préférablement 3 à 4% en masse, l'oxyde de calcium est dépourvu d'addition volontaire d'oxyde d'aluminium, on ajoute du calcin au mélange précurseur de verre, avant ou après l'ajout d'oxyde de calcium, dans une proportion massique comprise entre 5 et 40 % du total, le mélange précurseur de verre est préparé à l'état solide, le mélange précurseur de verre est préparé à une température comprise entre la température ambiante et la température ambiante augmentée de 20°C, et le mélange précurseur de verre est préparé sans apport d'énergie thermique.

13. Procédé selon l'une des revendications précédentes, dans lequel ledit mélange est enfourné dans un four électrique.

14. Procédé de fabrication de verre, comprenant un procédé de préparation selon l'une des revendications précédentes, dans lequel on met le mélange en fusion par au moins un brûleur à flamme dirigée vers le mélange, le comburant fourni au brûleur étant préférablement de l'oxygène.

## Patentansprüche

1. Verfahren zum Zubereiten einer Vorläufermischung für die Glasherstellung, umfassend das Zubereiten einer Glasvorläufermischung für einen Glasofen, wobei Wasser, Sand und Natriumcarbonat in Massenanteilen von mehr als 0 bis 5 %, 40 bis 65 % bzw. mehr als 0 bis höchstens 25 % gemischt werden und nach einer Wartezeit von mindestens 10 Minuten Calciumoxid in einem Massenanteil von 1 bis 20 % der Gesamtmenge hinzugefügt wird.

2. Verfahren nach Anspruch 1, wobei die Vorlaufzeit mindestens eine Stunde beträgt.

3. Verfahren nach Anspruch 1, wobei die Vorlaufzeit zwischen mindestens 10 Minuten und weniger als einer Stunde für eine Mischung aus Wasser, Sand und Natriumcarbonat mit höchstens 4,1 % Feuchtigkeit liegt.

4. Verfahren nach einem der vorhergehenden Ansprüche, wobei das Natriumcarbonat eine Korngröße aufweist, bei der weniger als 5 % durch ein 0,075-mm-Sieb gelangen, weniger als 15 % durch ein 0,150-mm-Sieb gelangen und weniger als 5 % durch ein 0,600-mm-Sieb gelangen.

5. Verfahren nach einem der vorhergehenden Ansprüche, wobei die Mischung aus Wasser, Sand und Natriumcarbonat höchstens 3 % Feuchtigkeit mit Natriumcarbonat mit einer Korngröße, die überwiegend größer als 0,500 mm und kleiner als 1,000 mm ist, und höchstens 2 % Feuchtigkeit mit Natriumcarbonat mit einer Korngröße, die überwiegend kleiner als 0,250 mm ist, aufweist.

6. Verfahren nach einem der vorhergehenden Ansprüche, wobei die Vorlaufzeit weniger als 72 Stunden beträgt und die Ausgangstemperatur der Rohstoffe mindestens 30 °C beträgt.

7. Verfahren nach einem der vorhergehenden Ansprüche, wobei das Calciumoxid eine derartige Korngröße aufweist, dass 70 bis 90 Masse-% nicht durch ein 0,1-mm-Sieb gelangen, vorzugsweise 30 bis 80 Masse-% nicht durch ein 0,5-mm-Sieb gelangen, vorzugsweise 30 bis 70 Masse-% nicht durch ein 2-mm-Sieb gelangen, oder das Calciumoxid eine derartige Korngröße aufweist, dass mehr als 90 Masse-% nicht durch ein 0,1-mm-Sieb gelangen und weniger als 5 Masse-% nicht durch ein 4-mm-Sieb gelangen, vorzugsweise mehr als 95 Masse-% nicht durch ein 0,1-mm-Sieb gelangen und weniger als 1 Masse-% nicht durch ein 4-mm-Sieb gelangen.

8. Verfahren nach einem der vorhergehenden Ansprüche, wobei das Calciumoxid eine mittlere Korngröße zwischen 1 und 1,5 mm aufweist.

9. Verfahren nach einem der vorhergehenden Ansprüche, wobei die Vorläufermischung in einem Glasofen weniger als 1 Stunde nach ihrer Zubereitung für eine Korngröße von 90 Masse-% oder mehr, die durch ein 0,1-mm-Sieb gelangt, vorzugsweise weniger als 2 Stunden nach ihrer Zubereitung für eine Korngröße von 70 bis 90 Masse-%, die durch ein 0,1-mm-Sieb gelangt, eingesetzt wird.

10. Verfahren nach einem der vorhergehenden Ansprüche, wobei die Vorläufermischung in einem Glasofen weniger als 8 Stunden nach ihrer Zubereitung für eine Korngröße von 70 Masse-% oder mehr, die durch ein 2-mm-Sieb gelangt, eingesetzt wird.

11. Verfahren nach einem der vorhergehenden Ansprüche, wobei der Sand trocken ist.

12. Verfahren nach einem der Ansprüche 1 bis 9, wobei das Wasser in dem Sand, vorzugsweise 3 bis 4 Masse-%, vorhanden ist, das Calciumoxid frei von einem freiwilligen Zusatz von Aluminiumoxid ist, der Glasvorläufermischung vor oder nach dem Zusatz von Calciumoxid Glasbruch in einem Massenanteil von 5 bis 40 % der Gesamtmasse zugesetzt wird, die Glasvorläufermischung im festen Zustand zubereitet wird, die Glasvorläufermischung bei einer Temperatur zwischen Raumtemperatur und Raumtemperatur mit einer Erhöhung um 20 °C zubereitet wird, und die Glasvorläufermischung ohne Zufuhr von Wärmeenergie zubereitet wird.

13. Verfahren nach einem der vorhergehenden Ansprüche, wobei die Mischung in einem elektrischen Ofen eingebrannt wird.

14. Verfahren zum Herstellen von Glas, umfassend ein Vorbereitungsverfahren nach einem der vorhergehenden Ansprüche, wobei die Mischung durch mindestens einen Brenner mit Flamme, die auf die Mischung gerichtet ist, geschmolzen wird, wobei das dem Brenner zugeführte Oxidationsmittel vorzugsweise Sauerstoff ist.

## Claims

1. Process of preparation of a precursor mixture for manufacturing glass comprising the preparation of a glass precursor mixture for a glassmaking furnace, in which water, sand and sodium carbonate are mixed in mass proportions of between more than 0 and 5%, 40% and 65%, and more than 0 and not more than 25%, respectively, and, after a delay of at least 10 minutes, calcium oxide is added in a mass proportion of between 1% and 20% of the total.

2. Process as claimed in claim 1, in which said delay is at least one hour.

3. Process as claimed in claim 1, in which said delay is between at least 10 minutes and less than one hour for a mixture of water, sand and sodium carbonate with a moisture content of not more than 4.1%.

4. Process as claimed in one of the preceding claims, in which the sodium carbonate has a particle size with less than 5% passing through a 0.075 mm screen, less than 15% passing through a 0.150 mm screen and less than 5% not passing through a 0.600 mm screen.

5. Process as claimed in one of the preceding claims, in which said mixture of water, sand and sodium carbonate has a moisture content of not more than 3% with sodium carbonate of particle size predominantly greater than 0.500 mm and less than 1.000 mm and not more than 2% with sodium carbonate of particle size predominantly less than 0.250 mm.

6. Process as claimed in one of the preceding claims, in which said delay is less than 72 hours and the initial temperature of the raw materials is at least 30°C.

7. Process as claimed in one of the preceding claims, in which the calcium oxide has a particle size such that 70% to 90% by mass does not pass through a 0.1 mm screen, preferably 30% to 80% by mass does not pass through a 0.5 mm screen, more preferably 30% to 70% by mass does not pass through a 2 mm screen or the calcium oxide has a particle size such that more than 90% by mass does not pass through a 0.1 mm screen and less than 5% by mass does not pass through a 4 mm screen, preferably more than 95% by mass does not pass through a 0.1 mm screen and less than 1% by mass does not pass through a 4 mm screen.

8. Process as claimed in one of the preceding claims, in which the calcium oxide has a mean particle size of between 1 and 1,5 mm.

9. Process as claimed in one of the preceding claims, in which the precursor mixture is used in a glassmaking furnace less than 1 hour after its preparation for a particle size of 90% or more by mass passing through a 0.1 mm screen, preferably less than 2 hours after its preparation for a particle size of 70% to 90% by mass passing through a 0.1 mm screen.

10. Process as claimed in one of the preceding claims, in which the precursor mixture is used in a glassmaking furnace less than 8 hours after its preparation for a particle size of 70% or more by mass passing through a 2 mm screen.

11. Process as claimed in one of the preceding claims, in which said sand is dry.

12. Process as claimed in one of claims 1-9, in which the water is present in said sand, preferably to 3% to 4% by mass, the calcium oxide is free of deliberate addition of aluminum oxide, cullet is added to the glass precursor mixture, before or after the addition of calcium oxide, in a mass proportion of between 5% and 40% of the total, the glass precursor mixture is prepared at a temperature between the ambient temperature and the ambient temperature increased by 20°C, and the glass precursor mixture is prepared without supplying thermal energy.

13. Process as claimed in one of the preceding claims, in which said mixture is fired in an electric furnace.

14. Process for manufacturing glass, comprising a process as claimed in of the preceding claims, in which the mixture is melted with at least one flame burner directed toward the mixture, the oxidant supplied to the burner being preferably oxygen.
